Europäisches Patentamt

European Patent Office

Office européen des brevets

(19)

(11) **EP 0 663 057 B1**

(12) **EUROPÄISCHE PATENTSCHRIFT**

(45) Veröffentlichungstag und Bekanntmachung des Hinweises auf die Patenterteilung:
**26.03.1997 Patentblatt 1997/13**

(21) Anmeldenummer: **93922929.0**

(22) Anmeldetag: **11.10.1993**

(51) Int Cl.⁶: **F25B 27/00**, B60L 11/02, B60H 1/00

(86) Internationale Anmeldenummer:
**PCT/EP93/02778**

(87) Internationale Veröffentlichungsnummer:
**WO 94/09327 (28.04.1994 Gazette 1994/10)**

(54) **STEUERBARE ANTRIEBSEINHEIT MIT VERBRENNUNGSMOTOR UND GENERATOR**

CONTROLLABLE DRIVE UNIT WITH COMBUSTION ENGINE AND GENERATOR

UNITE D'ENTRAINEMENT COMMANDABLE COMPRENANT UN MOTEUR A COMBUSTION INTERNE ET UN GENERATEUR

(84) Benannte Vertragsstaaten:
**DE FR GB IT**

(30) Priorität: **12.10.1992 DE 4234340**
**08.05.1993 DE 4315362**

(43) Veröffentlichungstag der Anmeldung:
**19.07.1995 Patentblatt 1995/29**

(73) Patentinhaber: **ICEMASTER GMBH**
**D-33104 Paderborn (DE)**

(72) Erfinder: **MERTENS, Jürgen**
**D-33104 Paderborn (DE)**

(74) Vertreter: **Hanewinkel, Lorenz, Dipl.-Phys.**
**Patentanwalt**
**Ferrariweg 17a**
**33102 Paderborn (DE)**

(56) Entgegenhaltungen:
**EP-A- 0 093 930         EP-A- 0 152 121**
**EP-A- 0 435 535         WO-A-92/13380**
**US-A- 4 853 553         US-A- 4 991 400**
**US-A- 5 140 826**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Der Erfindung betrifft eine Antriebseinheit für eine Arbeitsvorrichtung, bestehend aus einem Verbrennungsmotor, einer von diesem angetriebenen Arbeitsmaschine und einem elektrischem Verbraucher, wobei die zu erbringende Leistung bedarfsmäßig schwankt. Hiefür in Frage kommende Arbeitsmaschinen sind beispielsweise Pumpen, Kompressoren, Generatoren, Getriebe usw. in verschiedensten Arbeitsvorrichtungen. Solche Antriebseinheiten sind so geregelt, daß der Verbrennungsmotor jeweils dann abschaltet, wenn der Istwert einer zu regelnden Größe im Arbeitsprozeß einen vorgegebenen Sollwert über- bzw. unterschreitet, und er wird wieder angelassen, wenn der Istwert der Regelgröße den Sollwert um eine vorgegebene Differenz, d. h. mit einer Hysterese, unter- bzw. überschreitet, worauf der Verbrennungsmotor und die Antriebsmaschine dann mit Vollastdrehzahl betrieben werden.

Eine solcher Zweipunkt-Regelbetrieb ist mit vielen Nachteilen verbunden. Der Motor wird häufig im Anfahrbetrieb mit Untertemperatur betrieben, was eine Wirkungsgradminderung und erhöhte Schadstoffwerte im Abgas sowie einen erhöhten Verschleiß bringt. Darüberhinaus kommt es zu einer hohen Geräuschentwicklung, da mit Vollastdrehzahl gearbeitet wird.

Aus der EP-A 0 152 121 ist eine Antriebseinheit für eine Wärmepumpe mit einem Verbrennungsmotor vorbekannt, der einen Kompressor und einen Generator antreibt; wobei dort eine Messung des Leistungsbedarfes und eine dementsprechende Drehzahlregelung des Verbrennungsmotors vorgesehen ist.

Ausgehend von diesem Stand der Technik ist es die Aufgabe der Erfindung, eine Antriebseinheit mit weiter optimiertem Wirkungsgrad zu schaffen, die einen leisen, umweltfreundlichen, sparsamen und materialschonenden Betrieb ermöglicht.

Die Lösung dieser Aufgabe besteht darin, daß die Differenz des Istwertes der Regelgröße zum Sollwert sowie die Regelgröße beeinflussende Parameter gemessen werden, wobei aus diesen Meßwerten zugeordneten Leistungsbedarfskoeffizienten des Arbeitsprozesses der jeweilige Leistungsbedarf ermittelt wird. Demgemäß wird dann aus in einer Steuervorrichtung gespeicherten Kennwerten einer Leistungs-Motordrehzahlkennlinie eine Motorsolldrehzahl bestimmt, die drehzahlregelnd dem Verbrennungsmotor zugeführt wird.

Mit dem Verbrennungsmotor ist zusätzlich ein elektrischer Generator gekoppelt, der direkt und/oder über mindestens eine Spannungs- und Frequenzkonversionsvorrichtung elektrische Verbraucher speist. Dabei kommen Drehstrom-Synchron- oder Asynchron-Generatoren zum Einsatz. Die elektrische Leistung wird gemessen und über ein entsprechendes Signal der Steuervorrichtung gemeldet sowie dort dem Leistungsbedarf zugerechnet. Weiterhin ist es vorgesehen, daß in den seltenen Fällen, wo kein mechanischer Arbeitsbedarf vorliegt oder nur ein so geringer, daß der Verbrennungsmotor auch bei Standdrehzahl unnötig viel Leistung bringt, eine gesteuerte Abkupplung des Motors erfolgt. Dabei wird die elektrische Anlage vom Verbrennungsmotor weiter betrieben. Sobald wieder Arbeitsbedarf besteht, wird die Kupplung wieder eingeschaltet und der Arbeitsbetrieb aufgenommen.

Die Bedarfsermittlung wird in eine Motordrehzahl umgesetzt, indem beispielsweise Tabellendaten einer Leistungskennlinie, bezogen auf die Drehzahl in der Steuervorrichtung, abgespeichert sind, wobei die jeweilige optimale Drehzahl durch eine Abfrage und evtl. zusätzlich durch eine Interpolation aus den Tabellenwerten der Kennlinie bestimmt wird.

Die Solldrehzahl wird einer Drehzahlregelvorrichtung des Verbrennungsmotors als Sollsignal zugeführt. Der Steuervorrichtung wird ein von dem Motor abgenommenes Drehzahlsignal als ein Ist-Signal zugeführt. Die Differenz zu dem Drehzahlsollwert wird dann von der Steuervorrichtung einem Drehzahlstellglied des Verbrennungsmotors zugeführt. Dieses Drehzahlstellglied kann bei einem Dieselmotor z.B. ein Stellmotor für eine Hubeinstellung einer Kraftstoffeinspritzvorrichtung sein.

Bei der Inbetriebnahme einer Gesamtvorrichtung werden die Leistungsbedarfskoeffizienten der die Regelgröße beeinflussenden Parameter aufgrund von Erfahrungswerten bestimmt oder exakt berechnet, falls dies möglich ist. Diese Koeffizienten werden vorteilhaft durch eine Lernprogramm optimiert.

Erfindungsgemäß wird im allgemeinen der Verbrennungsmotor mit einer sehr niedrigen Drehzahl nahe seiner unteren zulässigen Drehzahl betrieben. Dadurch hält er seine Betriebstemperatur, entwickelt wenig Geräusch und weist einen hohen Wirkungsgrad auf. Der Verbrennungsmotor kann in seinen Abmessungen und in seiner Leistungsdimensionierung auf einen Durchschnittswert ausgelegt sein, der erheblich unter der Spitzenlast liegt, wenn diese nur selten auftritt, da Motore so kurzzeitig derartige erhöhte Spitzenlasten vertragen.

Auch die Betriebswerte, wie Schadstoffemission und Kraftstoffverbrauch, sind zweckmäßig auf den Durchschnittsbetrieb hin optimiert. Dies bringt erhebliche Vorteile und Einsparungen an Brennstoff gegenüber der üblichen Maximalbetriebsauslegung.

Besonders vorteilhaft ist die Verwendung dieser steuerbaren Antriebseinheit bei Kühlvorrichtungen für einen Kühlraum, insbesondere den Innenraum eines Kühltransporters, Omnibusses oder dergleichen, mit einem Verbrennungsmotor und einem davon angetriebenen Kompressor mit einem daran angeschlossenen Kühlmittelkreislauf, der einen Kondensator, ein Expansionsventil und mindestens einen Verdampfer umfaßt, dessen Rückleitung saugseitig zum Kompressor zurückgeführt ist, wobei die Kühlleistung mittels eines Innenthermometers bezüglich einer vorgegebenen Solltemperatur thermostatisch geregelt wird.

Derartige Kühlvorrichtungen sind allgemein bekannt. Sie sind so geregelt, daß jeweils der Kompressor abgeschaltet wird, wenn die Innentemperatur des Kühlraumes eine vorgegebene Solltemperatur unterschreitet, und er wieder angelassen wird, wenn die Innentemperatur die Solltemperatur um eine vorgegebene Differenz, d.h. mit einer Hysterese, überschreitet, worauf der Motor und der Kompressor wieder mit Vollastdrehzahl betrieben werden. Dieser Zweipunkt-Regelbetrieb der Kühlvorrichtung ist mit zahlreichen Nachteilen verbunden. Der Motor wird häufig im Anfahrbetrieb mit Untertemperatur betrieben, was eine Wirkungsgradminderung und erhöhte Schadstoffwerte im Abgas sowie erhöhten Verschleiß bringt. Weiterhin kommt es zu hoher Geräuschentwicklung, da mit Vollastdrehzahl gearbeitet wird. Auch tritt am Verdampfer bei der hohen Kühlleistung, wenn nur eine geringe Leistung im Mittel benötigt wird, eine Kondensation auf, die zu einem unerwünschten Feuchtigkeitsanstieg in der gekühlten Luft führt, was Korrosion verursachen kann und insbesondere in Omnibussen für Fahrgäste unzuträglich ist.

Aus jeweils einer Differenz der gemessenen Innentemperatur und der Solltemperatur sowie aus einer Differenz der Außentemperatur, die mit mindestens einem Außenthermometer laufend gemessen wird, zur Solltemperatur und aus diesen Koeffizienten zugeordneten Kühlleistungsbedarfs-Koeffizienten der zu kühlenden Einrichtung wird der jeweilige Kühlleistungsbedarf ermittelt und demgemäß aus in einer Steuervorrichtung gespeicherten Kennwerten einer Kühlleistungs-Motordrehzahlkennlinie eine optimale Motorsolldrehzahl bestimmt, die drehzahlregelnd dem Verbrennungsmotor zugeführt wird.

Der Kühlkreislauf benötigt nur einen kleinen Vorratsbehälter für das Kühlmedium. Der Dieselmotor kann in seinen Abmessungen und seiner Leistungsdimensionierung auf einen Durchschnittswert ausgelegt sein, der erheblich, z.B. 30 - 40 %, unter der Spitzenlast liegt, die nur wenige Stunden im Jahr bei extremen Witterungsverhältnissen auftritt, da Motore so kurzzeitig derartig erhöhte Spitzenlasten vertragen. Auch die Betriebswerte, nämlich die Schadstoffemission und der Kraftstoffverbrauch, sind zweckmäßig auf den Durchschnittsbetrieb hin optimiert. Dies erbringt erhebliche Vorteile und Einsparungen an Brennstoff gegenüber der üblichen Maximalbetriebsauslegung.

Weiterhin ist es vorteilhaft vorgesehen, daß in den seltenen Fällen, wenn kein Kühlbedarf vorliegt oder nur ein so geringer, daß der Motor auch bei Standdrehzahl unnötig viel Kühlleistung bringt, eine Abschaltung oder Abkopplung des Motors erfolgt. Da nur ein kleiner Kondensatorspeicher vorgesehen ist, wird jeweils ein späteres Wiederanlassen oder Ankuppeln des Motors praktisch ohne Gegendruck des Kompressors erfolgen, da das Kondensat dann bereits völlig verdampft ist und ein Druckausgleich im Kühlkreislauf herrscht.

Der Kühlleistungsbedarf wird ständig aus der Differenz der Außenhauttemperatur des Kühlraumes zur vorgegebenen Solltemperatur ermittelt, und durch eine Innentemperaturdifferenz zur Solltemperatur ergänzend bestimmt, was bei neu eingelagertem Kühlgut und insbesondere bei Wärmequellen im Kühlraum, z.B. Personen, erforderlich ist.

Weiterhin wird die Energieabgabe eines gegebenenfalls vorhandenen elektrischen Bordnetzes ständig überwacht und in den Kühlleistungsbedarf einbezogen.

Außer einer Messung der Außentemperatur der Oberfläche des Kühlraumes ist es zweckmäßig vorgesehen, auch eine Strahlungsmessung für eintreffende Infrarotstrahlung, insbesondere Sonnenlicht, auf den verschiedenen Oberflächen des Kühlfahrzeuges, insbesondere den Fensterflächen, vorzusehen, damit der Strahlungsanteil unmittelbar in die Kühlleistungs-Bedarfsrechnung einbezogen werden kann.

Die umfassende Kühlleistungs-Bedarfsmeldung ermöglicht es, eine möglichst genaue Anpassung der Kompressordrehzahl an den jeweiligen Bedarf herzustellen, so daß praktisch keine Stillsetzung des antreibenden Motors erfolgen muß. Die Bedarfsermittlung wird in eine Motordrehzahl bzw. Kompressordrehzahl umgesetzt, indem beispielsweise Tabellendaten einer Kühlleistungskennlinie, bezogen auf die Drehzahl in der Steuervorrichtung abgespeichert sind und die jeweilige optimale Drehzahl durch eine Abfrage und evtl. zusätzlich eine Interpolation aus den Tabellenwerten der Kennlinie bestimmt wird.

Die Solldrehzahl wird einer Drehzahlregelvorrichtung des Verbrennungsmotors als Sollsignal zugeführt. Der Drehzahlregler kann auch integrierter Teil der Steuervorrichtung sein. Diesem wird ein von dem Motor oder Kompressor abgenommenes Drehzahlsignal als ein Ist-Signal zugeführt. Die Differenz zu dem Drehzahlsollwert wird dann von der Steuervorrichtung einem Drehzahlstellglied des Dieselmotors zugeführt. Dieses Drehzahlstellglied ist z.B. ein Stellmotor für eine Hubeinstellung einer Kraftstoffeinspritzvorrichtung.

Für den Fall, daß die Außentemperatur wesentlich niedriger als die vorgegebene Innentemperatur ist, besteht die Möglichkeit, daß eine Kühlung nicht mehr benötigt wird, so daß dann vorgesehen ist, daß der Motor mit dem Kompressor vollständig stillgesetzt wird oder eine Entkupplung erfolgt. Hierzu erfolgt ein ständiger Vergleich der Innentemperatur mit einem unteren Temperaturgrenzwert, bei dessen Unterschreitung der Motor abgeschaltet oder abgekuppelt wird. Sobald die untere Temperaturgrenze wieder um ein vorgegebenes Maß überschritten wird, wird der Antriebsmotor angelassen bzw. angekuppelt und damit der Kompressor wieder in Funktion gesetzt.

Mit dem Antriebsmotor ist erfindungsgemäß ein elektrischer Drehstromgenerator gekoppelt, der die Gebläse am Verdampfer und am Kondensator betreibt, was insbesondere im Standbetrieb eines Fahrzeuges von großer Wichtigkeit ist. Da der Motor bei geringer Kühlleistung nur langsam dreht, erbringt auch der Generator einen Drehstrom niedriger Frequenz, so daß auch die Gebläse passen zu dem niedrigen Kühlbedarf langsam drehen und wenig Energie verbrauchen und ein geringes Geräusch erzeugen.

Der Generator kann zusätzlich vorteilhaft über eine Spannungs- und Frequenzkonversionsvorrichtung ein Bordnetz des Omnibusses oder Fahrzeuges speisen, so daß auch bei längeren Aufenthalten der Hauptmotor abgeschaltet sein kann und der Klimagerätemotor mit dem Generator über den Konverter die Beleuchtung, die Musikanlage etc. speist.

In einer weiteren Ausgestaltung ist der Generator fest mit dem Antriebsmotor gekoppelt und der Kompressor über eine steuerbare Kupplung an ihn angeschlossen. Auf diese Weise kann bei einer Unterschreitung des unteren Temperaturgrenzwertes, die Kupplung gelöst werden, wobei die elektrische Anlage von dem Antriebsmotor weiter betrieben wird. Sobald wieder Kühlbedarf entsteht, wird die Kupplung wieder eingeschaltet und der Kühlbetrieb aufgenommen.

Für die Berechnung der Kühlleistung aus den Temperaturdifferenzen der Solltemperatur zur gemessenen Innentemperatur und der gemessenen Außentemperatur sowie aus einer Strahlungs- und einer elektrischen Leistungsaufnahmemessung sind zugehörige Leistungskoeffizienten ermittelt, die aus den Oberflächengrößen, den Isolations- und Strahlungsresorptionskoeffizienten, sowie aus Erfahrungswerten des Wärmeüberganges von der Außenluft zur Oberfläche bei Stillstand und im Fahrbetrieb gewonnen. Bei der Inbetriebnahme einer Gesamtvorrichtung werden die Koeffizienten aufgrund von Erfahrungswerten bestimmt. Diese Koeffizienten werden vorteilhaft durch ein Lernprogramm optimiert, welches jeweils abhängig von dem Auftreten des Erfordernisses einer Stillsetzung des Kühlaggregates und abhängig von einer Überschreitung der Solltemperatur um einen vorgegebenen Wert bei Beobachtungszeiträumen, die größer als die thermischen Zeitkonstanten des Wärmedurchgangs durch die Isolationsschicht ist, inkremental der Unter- bzw. Überschreitung entgegenwirkend korrigiert und somit sukzessiv optimiert.

Sämtliche vorstehenden Maßnahmen erbringen insbesondere in Klimaanlagen von Personenfahrzeugen eine optimale komfortable Klimaregelung, bei der die Innentemperatur nur sehr geringe Schwankungen aufweist, da praktisch keine Kompressorabschaltung erfolgt und der Betrieb des Verdampfers mit einer moderaten Verdampfungsleistung betrieben wird, so daß es praktisch zu keiner Vereisung kommt und die Erhöhung der Luftfeuchtigkeit in der Abluft des Verdampfers nur begrenzt ist.

Die meisten elektrischen Verbraucher, z.B. Elektromotoren, sind so ausgelegt, daß sie innerhalb einer gewissen Frequenzbandbreite und Spannungsbandbreite arbeiten können. Dieser Frequenzbereich liegt in Europa beispielsweise zwischen 45 Hz und 55 Hz. Bei entsprechender Auslegung der Elektromotoren kann der Bereich entsprechend größer sein, z.B. einen Bereich zwischen 40 Hz und 60 Hz umfassen. Bei einer Glühlampe ist die Stromfrequenz in diesem Frequenzbereich sogar ganz ohne Bedeutung. Diese erlaubte Frequenzbandbreite stellt nun einen Regelungsbereich zur Anpassung an Laständerungen dar, wobei Konverter (Wechselrichter) nicht nötig sind.

Über die Steuervorrichtung wird die Generatorfrequenz innerhalb der erlaubten Frequenzbandbreite und damit die Ausgangsspannung und der Strom über die Motordrehzahl des Verbrennungsmotors so geregelt, daß die elektrische Leistung des Generators dem aktuellen Lastbedarf entspricht.

Der Einsatz der erfindungsgemäßen steuerbaren Antriebseinheit ist überall dort interessant, wo Maschinen eingesetzt werden, die Strom benötigen und an wechselnden Orten mit und ohne Netzstromanschluß eingesetzt werden. Wenn kein Netzstromanschluß vorhanden ist, erfolgt die Stromversorgung über den Generator mit drehzahlgeregeltem Verbrennungsmotor.

Die steuerbare Antriebseinheit ist in vorteilhafter Weise auch in Verbindung mit einer Windkraftanlage zu verwenden.

Auf den Zeichnungen sind Ausführungsbeispiele dargestellt, welche nachfolgend näher erläutert werden. Es zeigt:

Fig. 1 ein Blockschaltbild einer ersten Ausführung,

Fig. 2 ein Blockschaltbild einer zweiten Ausführung,

Fig. 3 ein Blockschaltbild einer dritten Ausführung.

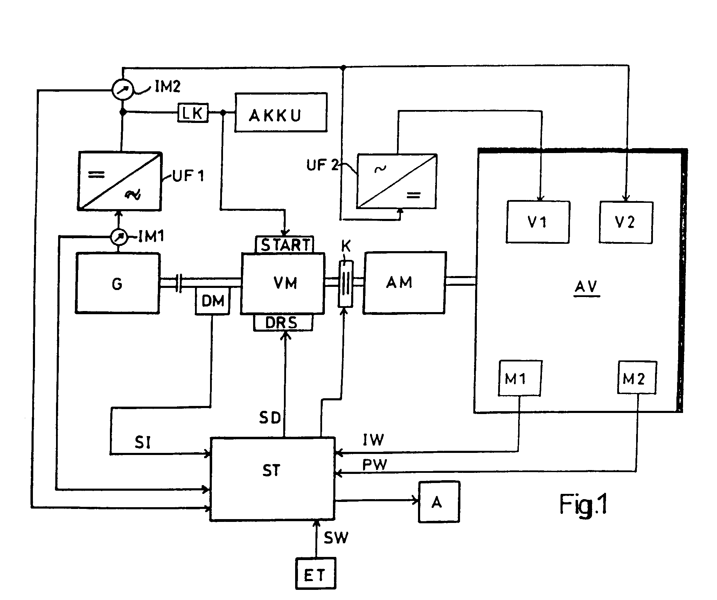

Fig. 1 zeigt einen Verbrennungsmotor (VM), der gewöhnlich ein Dieselmotor ist, an dem eine Arbeitsmaschine (AM) angeflanscht ist, die eine Arbeitsvorrichtung (AV) antreibt.

Für die laufende Leistungsberechnung ist eine Steuervorrichtung (ST) vorgesehen, welche eingangsseitig mit einem Istwert-Meßaufnehmer (M1) für eine Regelgröße sowie einem oder mehreren Meßwertaufnehmern (M2) für die Regelgröße beeinflußende Parameter (PW) verbunden ist. Ferner ist es vorteilhaft vorgesehen, einen Sollwert (SW) für die Regelgröße mittels einer Eingabetastatur (ET) in die Steuervorrichtung (ST) einzugeben. Die Steuervorrichtung (ST) enthält einen geeignet programmierten Mikroprozessor, der in seinem Speicher Leistungsbedarfskoeffizienten und eine Tabelle enthält, die die Drehzahl der Arbeitsmaschine (AM) mit der Arbeitsleistung korreliert. Dem gemessenen Istwert (IW) der Regelgröße und den gemessenen Parameterwerten (PW) werden entsprechend dem vorgegebenen Sollwert (SW) Leistungsbedarfskoeffizienten zugeordnet. Aus diesen Koeffizienten ermittelt die Steuervorrichtung (ST) die Solldrehzahl für den Verbrennungsmotor (VM).

Die Motordrehzahl wird mit einem Drehzahlmesser (DM) von der Motorwelle abgenommen und ein entsprechendes Ist-Drehzahlsignal (SI) der Steuervorrichtung (ST) zugeführt. Aus der Differenz zur Motordrehzahl ermittelt die Steuervorrichtung ein Ausgangssignal (SD), das unmittelbar ein Drehzahlstellglied (DRS) des Verbrennungsmotors (VM) betätigt.

Handelt es sich um die Steuerung eines Dieselmotors, so gibt das Drehzahlstellglied (DRS) vorzugsweise den Hub der Einspritzvorrichtung mit einem Stellmotor vor.

Auf der Motorwelle ist ein elektrischer Generator (G), vorzugsweise ein Drehstromgenerator, angeordnet. Dieser speist direkt und/oder über einen Konverter (UF1), welcher eine genormte Gleichspannung abgibt, einen elektrischen Verbraucher (V2) und einen Akkumulator (AKKU). Der Ladestrom für den Akkumulator (AKKU) fließt über eine Ladekontrollschaltung (LK) und wird, wenn der Akkumulator (AKKU) vollständig aufgeladen ist, von dieser unterbrochen. Der Konverter (UF1) und/oder der Akkumulator (AKKU) speisen einen weiteren Konverter (UF2), welcher eine vorgegebene Spannung mit vorgegebener Frequenz abgibt, (z.B. 220 V, 380 V und 50 Hz, 60 Hz) einen oder mehrere Verbraucher (V1). Hinter dem Generator (G) befindet sich ein Strommeßgerät (IM1), dessen Meßsignal proportional zur entnommenen elektrischen Leistung ist und der Steuervorrichtung (ST) als weiteres Eingangssignal zur Leistungsberechnung zugeführt ist. Darüberhinaus ist ein weiteres Strommeßgerät (IM2) vorgesehen, welches die dem Akkumulator (AKKU) und dem Konverter (UF1) entnommene elektrische Leistung ermittelt und dessen Meßsignal ebenfalls der Steuervorrichtung (ST) zugeführt ist.

Zwischen der Arbeitsmaschine (AM) und dem Verbrennungsmotor (VM) ist eine Kupplung (K) angeordnet, die von der Steuervorrichtung (ST) betätigbar ist. Auf diese Weise läßt sich die Arbeitsmaschine (AM) abkuppeln, wenn kein Bedarf an mechanischer Arbeitsleistung besteht. Der Generator (G) wird jedoch vom Verbrennungsmotor (VM) weiter angetrieben. Um die beim Ab- und Ankuppeln der Arbeitsmaschine (AM) auftretenden Leistungsspitzen am Generator (G) auszugleichen, ist dieser vorzugsweise mit einem Schwungrad entsprechender Masse ausgestattet.

Der Akkumulator (AKKU) dient zur Pufferung bei Lastschwankungen bis der Verbrennungsmotor (VM) nachgeregelt ist. Er kann dafür relativ klein sein. Er kann aber auch bei häufigen, langen Niedriglastfällen zur Überbrückung dienen, wobei der Verbrennungsmotor (VM) abgeschaltet und vor Ende der Entladung des Akkumulators (AkkU) von diesem über einen Starter (START) automatisch elektrisch gestartet wird.

Über die Eingabetastatur (ET) können neben dem Sollwert (SW) auch Berechnungskoeffizienten sowie ein unterer bzw. oberer Grenzwert für die Regelgröße in die Steuervorrichtung (ST) eingegeben werden. Ferner ist eine Ausgabevorrichtung (A), zum Beispiel ein LCD-Display, zur Anzeige des jeweils vorgegebenen Sollwertes (SW) sowie des jeweiligen Istwertes (IW) vorgesehen.

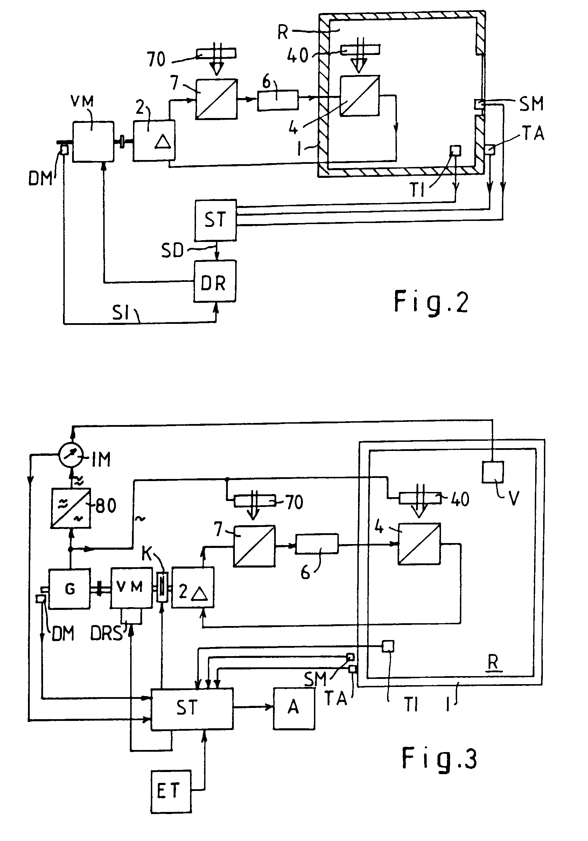

Die Konverter (UF1, UF2) sind vorzugsweise in bekannter Weise mit Halbleiterschaltern, Kondensatoren und Drosseln bestückt, so daß keine mechanischen Verschleißteile enthalten sind. Fig.2 zeigt eine nicht zur Erfindung gehörende Ausführungsform ohne Generator.

Fig. 2 zeigt einen Verbrennungsmotor (VM), der gewöhnlich ein Dieselmotor ist, an dem ein Kompressor (2) angeflanscht ist, der einen Kühlmittelkreislauf speist. Das Kühlmittel wird komprimiert in einen Kondensator (7) geführt, von dem das Kondensat in einen Kondensatspeicher (6) läuft, aus dem es über ein Expansionsventil (5) in den Verdampfer (4) eintritt, von wo das expandierte Kühlmittelgas in den Kompressor ansaugseitig zurückströmt. Der Verdampfer befindet sich in dem Kühlraum (R), der mit einer Isolation (I) allseitig umgeben ist. Die Außenhaut besteht im Fall, daß der Kühlraum (R) ein Omnibusinnenraum ist, selbstverständlich teilweise aus Glasflächen, welche zum Teil für Wärmestrahlen durchlässig sind, so daß auch die Strahlungswärme durch die Kühlvorrichtung abgeführt werden muß. Zur wirksamen Kälte-bzw. Wärmeabfuhr aus dem Verdampfer (4) bzw. aus dem Kondensator (7) sind zugehörige Gebläse (40, 70) vorgesehen, die elektrisch angetrieben sind. Der Speicher (6) ist mit vergleichbar zu konventionellen Kühlanlagen sehr geringer Kapazität ausgelegt, da die Kühlvorrichtung kontinuierlich läuft und deshalb eine Kühlmittelspeicherung praktisch nicht erforderlich ist.

Für die laufende Kühlleistungsberechnung ist eine Steuervorrichtung (ST) vorgesehen, welche eingangsseitig mit einem Innenthermometer (TI), mehreren an der Außenhaut des Kühlraumes (R) angeordneten Außenthermometern (TA), einem oder mehreren Wärmestrahlungsmessern (SM), die insbesondere den Fensterflächen zugeordnet sind, verbunden. In der Steuervorrichtung (ST) befindet sich ein geeignet programmierter Mikroprozessor, der in einem Speicher die Leistungskoeffizienten sowie eine Tabelle enthält, welche die Korrelation der Kompressordrehzahl zur Kühlleistung darstellt. Ausgangsseitig speist die Steuervorrichtung (ST) mit einem die Soll-Drehzahl darstellenden Signal (SD), einen Drehzahlregler (DR), dem andererseits ein Ist-Drehzahlsignal (SI) zugeführt ist, welches mit einem Drehzahlmesser (DM) von der Kompressor-bzw. Motorwelle abgenommen ist. Das Differenzsignal des Drehzahlreglers wirkt auf die Speisung des Verbrennungsmotors zurück.

Fig. 3 zeigt eine weitere Ausführung der Vorrichtung, bei der auf der Motorwelle ein elektrischer Generator (G) angeordnet ist, der vorzugsweise ein Drehstromgenerator ist. Dieser speist die Drehstromgebläse (40, 70), so daß deren Drehzahl proportional zur Motordrehzahl und somit proportional zum Kühlleistungsbedarf ist. Außerdem speist der Generator (G) einen Konverter (80), welcher eine genormte Spannung mit einer genormten Frequenz abgibt, die ein Bordnetz (V) mit Verbrauchern, z.B. Lampen, Musikanlage und Signaleinrichtungen, speist. Das Bordnetz (V) ist über ein Strommeßgerät (IM) geführt, dessen Meßsignal proportional zur aufgenommenen elektrischen Leistung ist und der Steuervorrichtung (ST) als weiteres Eingangssignal zur Kühlleistungsberechnung zugeführt ist.

Im gegebenen Beispiel ist die Funktion des Drehzahlreglers in die Steuervorrichtung (ST) integriert, weshalb das Drehzahlmeßsignal des Drehzahlmessern (DM) als weiteres Eingangssignal in die Steuervorrichtung (ST) geführt ist. Das Ausgangssignal der Steuervorrichtung (ST) betätigt unmittelbar ein Drehzahlstellglied (DRS), welches, falls es sich um die Steuerung eines Dieselmotors handelt, vorzugsweise den Hub der Einspritzvorrichtung mit einem Stellmotor vorgibt. Zur Eingabe der verschiedenen Kältebedarf-Berechnungskoeffizienten, welche die Oberflächengrößen, die spezifischen Isolationswerte, die Fensterflächen, die spezifische Strahlungsaufnahme usw. umfassen sowie der Kompressorcharakteristik in Bezug auf seine Drehzahl ist an die Steuervorrichtung eingangsseitig eine Tastatur (ET) angeschlossen, die über ein Eingabeprogramm des Mikroprozessors bedient wird.

Über die Eingabetastatur (ET) wird weiterhin die jeweils gewünschte Solltemperatur sowie der untere Temperaturgrenzwert vorgegeben. Eine Ausgabevorrichtung (A), zum Beispiel ein digitales Display, dient der Kontrolle der eingegebenen Daten und der Anzeige der jeweils vorgegebenen Solltemperatur sowie der jeweiligen Innentemperatur.

In einer speziellen Ausführung ist es vorgesehen, wie dargestellt, daß zwischen dem Kompressor (2) und dem Motor (VM) eine Kupplung (K) angeordnet ist, welche über ein Ansteuersignal von der Steuervorrichtung (ST) betätigbar ist. Auf diese Weise läßt sich der elektrische Generator (G) von dem Motor (VM) betreiben, auch wenn keinerlei Kühlleistungsbedarf besteht, oder wenn nur die Kühlleistung aus dem im Vorratsbehälter (6) befindlichen Kühlmittel umgesetzt wird, wobei das Gebläse (40) die Kühlluft von dem Verdampfer (4) in den Kühlraum (R) transportiert.

Der Konverter (80) ist vorzugsweise in bekannter Weise mit Halbleiterschaltern, Kondensatoren und Drosseln bestückt, so daß er keinerlei mechanische Verschleißteile enthält.

Die meisten elektrischen Verbraucher, z.B. Elektromotoren (Gebläse, Kompressor) sind so ausgelegt, daß sie innerhalb einer gewissen Frequenzbandbreite um eine Nennfrequenz ($f_N$) herum, zwischen einem unteren Frequenzwert ($f_U$) und einem oberen Frequenzwert ($f_O$) arbeiten können. Dieser Frequenzbereich liegt in Europa beispielsweise zwischen 45 Hz und 55 Hz. Bei entsprechender Auslegung der Elektromotoren kann der Bereich entsprechend größer sein (z.B. von 40 Hz bis 60 Hz). Bei einer Glühlampe ist die Stromfrequenz in diesem Bereich sogar ganz ohne Bedeutung. Die erlaubte Frequenzbandbreite stellt nun einen Regelungsbereich zur Anpassung an Laständerungen dar, wobei ein Konverter (Wechselrichter) überflüssig ist.

Bei einem Synchrongenerator ist die Ausgangsspannung ($U_A$) proportional zur Drehzahl mit der der Generator (G) angetrieben wird. Bei Laständerung wird die Ausgangsspannung ($U_A$) des Generators (G) durch Drehzahländerung an dem den Generator (G) antreibenden Verbrennungsmotor (VM) der aktuellen Last angepaßt. Die damit einhergehende Frequenzänderung beeinträchtigt innerhalb der erlaubten Frequenzbandbreite die Funktion der elektrischen Verbraucher nicht. Die Generator-Ausgangsspannung ($U_A$) wird gemessen und der Steuervorrichtung (ST) zugeführt. Die Steuervorrichtung (ST) ermittelt aus gespeicherten Generatorkenndaten und aus der Generatorfrequenz (f) eine Generator-Sollspannung ($U_S$).

Die aufgrund des Generator-Innenwiderstandes (RG) auftretende Abweichung der Generator-Ausgangsspannung ($U_A$) von der Generator-Sollspannung ($U_S$) beim Fließen eines Stromes (I) im belasteten Fall wird zur Bestimmung des Stromwertes genutzt und bei der Regelung entsprechend berücksichtigt. Der Zusammenhang wird durch folgende Gleichung beschrieben:

$$U_A = U_S - I \cdot R_G.$$

Der Generator (G) wird so über die Frequenz (f) geregelt, daß er bei Niedrigstlast nahe der unteren Frequenz ($f_U$) betrieben wird und bei steigendem Leistungsbedarf steigender Strom (I) die Soll-Frequenz ($f_S$) erhöht wird. Dies kommt in folgender Gleichung zum Ausdruck:

$$f_S = f_U + (f_O - f_U) \cdot I/I_{Max}.$$

$I_{Max}$ ist dabei der Strom, den der Generator liefert, wenn er mit der oberen Frequenz ($f_O$) betrieben wird.

**Patentansprüche**

1. Steuerbare Antriebseinheit für eine Arbeitsvorrichtung, bestehend aus einem Verbrennungsmotor und einer von diesem angetriebenen Antriebsmaschine, und einem mit dem Verbrennungsmotor gekoppelten elektrischen Generator, der direkt und/oder über mindestens eine Konverterschaltung, welche eine vorgegebene Spannung und Frequenz abgibt, elektrische Verbraucher speist, wobei die Arbeitsleistung bezüglich eines vorgegebenen Sollwertes für eine Regelgröße im Arbeitsverfahren mittels eines Istwert-Meßaufnehmers für die Regelgröße geregelt ist und die Drehzahl des Verbrennungsmotors in Abhängigkeit vom Arbeitsleistungsbedarf regelbar ist, dadurch gekennzeichnet, daß

   - jeweils aus einer Differenz des gemessenen Istwertes (IW) zum vorgesehenen Sollwert (SW) der Regelgröße und aus die Regelgröße beinflussenden Parametern (PW), die mit entsprechenden Parameterwert-Meßaufnehmern (M2) laufend gemessen werden, und aus diesen Meßwerten zugeordneten Leistungsbedarfs-Koeffizienten der Arbeitsvorrichtung (AV) der jeweilige Leistungsbedarf ermittelt wird und demgemäß aus in einer Steuervorrichtung (ST) gespeicherten Kennwerten einer Leistungsdrehzahlkennlinie eine optimale Motordrehzahl bestimmt wird, die einem Drehzahlstellglied (DRS) des Verbrennungsmotors (VM) zugeführt wird,

- und der elektrische Leistungsverbrauch gemessen und dem Leistungsbedarf zugerechnet wird.

2. Steuerbare Antriebseinheit nach Anspruch 1, dadurch gekennzeichnet, daß der Steuervorrichtung (ST) ein Drehzahlsignal eines an dem Verbrennungsmotor (VM) angeordneten Drehzahlmessers (DM) zugeführt ist, dessen Differenz zur jeweiligen Motorsolldrehzahl einem Drehzahlgestellglied (DRS) des Verbrennungsmotors (VM) zugeführt ist.

3. Steuerbare Antriebseinheit nach Anspruch 1 oder Anspruch 2, dadurch gekennzeichnet, daß in der Steuervorrichtung (ST) der jeweils gemessene Istwert (IW) der Regelgröße mit einem vorgegebenen Grenzwert verglichen wird, der um eine vorgegebene Differenz über bzw. unter dem jeweils vorgegebenen Sollwert liegt, und jeweils dann, wenn von dem Istwert (IW) der Grenzwert über- bzw. unterschritten wird, der Verbrennungsmotor (VM) über eine Kupplung (K) von der Arbeitsmaschine (AM) gesteuert abgekuppelt wird, wobei der Drehstromgenerator (G) weiter angetrieben wird, und wenn danach der Istwert den vorgegebenen Sollwert wieder erreicht hat, der Verbrennungsmotor (VM) wieder an die Arbeitsmaschine (AM) gesteuert angekuppelt wird.

4. Steuerbare Antriebseinheit nach einem der Ansprüche 1 bis 3, dadurch gekennzeichnet, daß der Drehstromgenerator (G) einen Konverter (UF1) speist, der eine vorgegebene Gleichspannung an einen elektrischen Verbraucher (V2) abgibt und/oder einen Akkumulator (AKKU) lädt.

5. Steuerbare Antriebseinheit nach Anspruch 4, dadurch gekennzeichnet, daß der Ladestrom (IL) für den Akkumulator (AKKU) durch eine Ladekontrollschaltung (LK) abgeschaltet wird, wenn der Akkumulator (AKKU) vollständig geladen ist.

6. Steuerbare Antriebseinheit nach Anspruch 4 oder 5, dadurch gekennzeichnet, daß die dem Drehstromgenerator (G) entnommene elektrische Leistung durch ein Strommeßgerät (IM1) und/oder die dem Akkumulator (AKKU) und dem Konventer (UF1) entnommene elektrische Leistung durch ein Strommeßgerät (IM2) ermittelt und in der Steuervorrichtung (ST) dem Leistungsbedarf zugerechnet werden.

7. Steuerbare Antriebseinheit nach einem der Ansprüche 4 bis 6, dadurch gekennzeichnet, daß der Verbrennungsmotor (VM), wenn kein Bedarf an mechanischer Arbeitsleistung und nur ein Niedrigbedarf an elektrischer Leistung besteht, gesteuert abgeschaltet wird, wobei dann der Akkumulator (AkkU) zur Überbrückung der Stromversorgung dient und vor Ende seiner Entladung den Verbrennungsmotor (VM) über einen Starter (START) automatisch elektrisch startet.

8. Steuerbare Antriebseinheit nach einem der Ansprüche 1 bis 7, dadurch gekennzeichnet, daß der Drehstromgenerator (G) ein Schwungrad entsprechender Masse zum Ausgleich von Leistungsspitzen beim Ab- und Ankuppeln des Verbrennungsmotors (VM) an die Arbeitsmaschine (AM) aufweist.

9. Steuerbare Antriebseinheit nach einem der vorstehenden Ansprüche, dadurch gekennzeichnet, daß die Generatorfrequenz (f) innerhalb einer zulässigen Frequenzbandbreite um eine Generator-Nennfrequenz ($f_N$) herum, zwischen einem unteren Frequenzwert ($f_U$) und einem oberen Frequenzwert ($f_O$) von der Steuereinrichtung (ST) über die Motordrehzahl des Verbrennungsmotors (VM) so geregelt wird, daß die Generator-Ausgangsspannung dem jeweiligen elektrischen Leistungsverbrauch angepaßt ist.

10. Steuerbare Antriebseinheit nach Anspruch 1, dadurch gekennzeichnet, daß dieselbe eine Kühlvorrichtung für einen Kühlraum (R), wie den Innenraum eines Kühltransporters, Omnibusses oder dergleichen, umfaßt, mit einem vom Verbrennungsmotor (VM) angetriebenen Kompressor (2) mit einem daran angeschlossenen Kühlmittelkreislauf, der einen Kondensator (7), ein Expansionsventil (5) und mindestens einen Verdampfer (4) aufweist, dessen Rückleitung saugseitig zum Kompressor (2) zurückgeführt ist, wobei die Kühlleistung mittels eines Innenthermometers (TI) bezüglich einer vorgegebenen Solltemperatur thermostatisch geregelt ist und daß jeweils aus einer Differenz der gemessenen Innentemperatur und der Solltemperatur sowie aus einer Differenz der Außentemperatur, die mit mindestens einem Außenthermometer (TA) laufend gemessen wird, zur Solltemperatur und aus diesen Differenzen zugeordneten Kühlleistungsbedarfskoeffizienten der zu kühlenden Einrichtung der jeweilige Kühlleistungsbedarf ermittelt wird und demgemäß aus in der Steuervorrichtung (ST) gespeicherten Kennwerten einer Kühlleistungs-Motordrehzahlkennlinie die optimale Motorsolldrehzahl bestimmt wird, die einem Drehzahlregler (DR) des Verbrennungsmotors (VM) zugeführt wird.

11. Steuerbare Antriebseinheit nach Anspruch 10, dadurch gekennzeichnet, daß mehrere Außenthermometer an den Oberflächen an verschiedenen Außenseiten der zu kühlenden Einrichtung angeordnet sind.

12. Steuerbare Antriebseinheit nach Anspruch 10 und 11, dadurch gekennzeichnet, daß mindestens ein Wärmestrahlungs-Außenmesser (SM) an der zu kühlenden Einrichtung angeordnet ist, deren jeweiliges Strahlungsmeßsignal, mit einem Strahlungsdurchlaßkoeffizienten der Fensterflächen verknüpft, dem Kühlleistungsbedarf zugerechnet wird.

13. Steuerbare Antriebseinheit nach einem der Ansprüche 10 bis 12, dadurch gekennzeichnet, daß der Drehzahlregler (DR) Teil der Steuervorrichtung (ST) ist und ihm ein Drehzahlsignal eines an dem Verbrennungsmotor (VM) angeordneten Drehzahlmessers (DM) zugeführt ist, dessen Differenz zur jeweiligen Motorsolldrehzahl dem Drehzahlstellglied (DRS) des Verbrennungs motors (VM) zugeführt ist.

14. Steuerbare Antriebseinheit nach einem der vorstehenden Ansprüche, dadurch gekennzeichnet, daß das Drehzahlstellglied (DRS) eine Hubeinstellung einer Kraftstoffeinspritzvorrichtung umfaßt.

15. Steuerbare Antriebseinheit nach einem der Ansprüche 10 bis 14, dadurch gekennzeichnet, daß in der Steuervorrichtung (ST) die jeweils gemessene Innentemperatur mit einem vorgegebenen unteren Temperaturgrenzwert verglichen wird, der um eine vorgegebene Temperaturdifferenz unter der jeweils vorgegebenen Solltemperatur liegt, und jeweils dann, wenn von der Innentemperatur der untere Temperaturgrenzwert unterschritten wird, der Verbrennungsmotor (VM) abgeschaltet oder von dem Kompressor (2) gesteuert abgekuppelt wird und wenn danach die Innentemperatur die vorgegebene Solltemperatur wieder erreicht hat, der Verbrennungsmotor (VM) wieder angelassen oder an den Kompressor (2) gesteuert angekuppelt wird.

16. Steuerbare Antriebseinheit nach einem der Ansprüche 10 bis 15, dadurch gekennzeichnet, daß der mit dem Verbrennungsmotor (VM) gekoppelle generator ein elektrischer Drehstromgenerator (G) ist, der einen dem Verdampfer (4) und/oder dem Kondensator (7) jeweils zugeordneten Drehstrom-Gebläsemotor (40, 70) speist.

17. Steuerbare Antriebseinheit nach einem der Ansprüche 10 bis 16, dadurch gekennzeichnet, daß der Generator (G) eine Konverterschaltung (80) speist, die eine vorgegebene Spannung und Frequenz an ein Bordnetz (V) des Omnibusses oder dergleichen abgibt.

18. Steuerbare Antriebseinheit nach einem der Ansprüche 10 bis 17, dadurch gekennzeichnet, daß jeweils die von einem Bordnetz (V) des Omnibusses oder dgl. aufgenommene elektrische Leistung durch ein Strommeßgerät (IM) ermittelt und der Steuervorrichtung (ST) gemeldet wird und in der Steuervorrichtung (ST) jeweils dem Kühlleistungsbedarf zugerechnet wird.

19. Steuerbare Antriebseinheit nach einem der Ansprüche 10 bis 18, dadurch gekennzeichnet, daß die Kühlleistungsbedarfskoeffizienten in die Steuervorrichtung (ST) eingespeichert sind und über ein Optimierungsprogramm jeweils bei einer Stillsetzung des Kompressors (2) und jeweils bei einer Überschreitung der Solltemperatur um ein vorgegebenes Maß eine inkrementale Erhöhung oder Erniedrigung des betreffenden Kühlleistungsbedarfskoeffizienten in einem der genannten Stillsetzung oder Überschreitung entgegenwirkender Richtung erfolgt.

## Claims

1. Controllable drive unit for a working machine, consisting of a combustion engine and a prime mover powered by the latter, and coupled to the combustion engine an electrical generator supplying electrical consumers directly and/or via at least one converter circuit emitting a preset voltage and frequency, the work output with regard to a preset nominal value for a controlled variable in the operating process being regulated by means of an actual value sensor in respect of said controlled variable, and the speed of the combustion engine being controllable in dependence on the work output requirement, characterised in that

- the particular energy requirement concerned is established in each case from a differential between the measured actual value (IW) and the nominal value (SW) provided for the controlled variable and from parameters (PW) affecting the controlled variable, which are continuously measured using corresponding parameter value sensors (M2), and from energy requirement coefficients in respect of the working machine (AV) which have been assigned to said measured values, and accordingly an optimum engine speed is determined from characteristic values on an output speed characteristic curve stored in a control device (ST), and said optimum engine speed is sent to a final speed controlling element (DRS) for the combustion engine (VM),

- and the electrical energy consumption is measured and computed into the energy requirement.

2. Controllable drive unit according to claim 1, characterised in that a speed signal from a revolution counter (DM) arranged on the combustion engine (VM) is sent to the control device (ST), and the difference between said speed signal and the respective nominal engine speed is sent to a final speed controlling element (DRS) for the combustion engine (VM).

3. Controllable drive unit according to claim 1 or claim 2, characterised in that in the control device (ST) the respective measured actual value (IW) of the controlled variable is compared with a preset threshold value which is above or below the respective preset nominal value by a preset differential, and whenever the actual value (IW) is above or below the threshold value, the combustion engine (VM) is decoupled in a controlled manner from the working machine (AM) via a clutch (K), and at the same time the three-phase generator (G) continues to be driven, and once the actual value has then been re-attained the preset nominal value, the combustion engine (VM) is coupled back to the working machine (AM) in a controlled manner.

4. Controllable drive unit according to any of claims 1 to 3, characterised in that the three-phase generator (G) supplies a converter (UF1) which transmits a preset direct voltage to an electrical consumer (V2) and/or charges a battery (AKKU).

5. Controllable drive unit according to claim 4, characterised in that the charging current (IL) for the battery (AKKU) is switched off by a charge control circuit (LK) once the battery (AKKU) is fully charged.

6. Controllable drive unit according to claim 4 or 5, characterised in that the electrical energy taken from the three-phase generator (G) is ascertained by a current measuring instrument (IM1) and/or the electrical energy taken from the battery (AKKU) and the converter (UF1) is ascertained by a current measuring instrument (IM2) and computed into the energy requirement in the control device (ST).

7. Controllable drive unit according to any of claims 4 to 6, characterised in that if there is no mechanical operating energy requirement and only a small electrical energy requirement, the combustion engine (VM) is shut down in a controlled manner, in which case the battery (AKKU) is used to temporarily meet the current requirement and before it becomes discharged automatically starts the combustion engine (VM) electrically using a starter (START).

8. Controllable drive unit according to claims 1 to 7, characterised in that the three-phase generator (G) features a flywheel of corresponding mass to compensate for output surges when decoupling/coupling the combustion engine (VM) from/to the working machine (AM).

9. Controllable drive unit according to any of the preceding claims, characterised in that within a permitted frequency bandwidth the control device (ST) uses the speed of the combustion engine (VM) to regulate the generator frequency (f) by a rated generator frequency $(f_N)$, between a lower frequency level $(f_U)$ and an upper frequency level $(f_O)$, in such a manner that the generator output frequency is matched to the respective electrical energy consumption.

10. Controllable drive unit according to claim 1, characterised in that the unit includes a refrigerating machine for a refrigeration chamber (R), such as the interior of a refrigerated lorry, omnibus or the like, having a compressor (2) driven by the combustion engine (VM) and having a refrigeration circuit connected thereto which features a condenser (7), an expansion valve (5) and at least one evaporating apparatus (4), the return line of which runs back to the intake side of the compressor (2), the refrigeration output being thermostatically controlled in regard to a preset nominal temperature by means of an internal thermometer (TI), and that the particular refrigeration requirement is established respectively from a differential between the measured internal temperature and the nominal temperature and from a differential between the external temperature, which is measured continuously by at least one external thermometer (TA), and the nominal temperature, and from refrigeration output requirement coefficients for the equipment being cooled, which coefficients are assigned to said differentials, and accordingly the optimum nominal engine speed is determined in the control device (ST) from characteristic values on a characteristic curve of the refrigeration output engine speed, and said optimum nominal engine speed is sent to a speed governor (DR) for the combustion engine (VM).

11. Controllable drive unit according to claim 10, characterised in that a plurality of external thermometers are arranged on the surfaces of different external faces of the equipment being cooled.

12. Controllable drive unit according to claims 10 and 11, characterised in that at least one external heat radiation meter (SM) is arranged on the equipment being cooled, the respective measured radiation signal, combined with a radiation throughput coefficient for the window surfaces, is computed into the refrigeration output requirement.

13. Controllable drive unit according to any of claims 10 to 12, characterised in that the speed governor (DR) is part of the control device (ST) and to it is sent a speed signal from a revolution counter (DM) arranged on the combustion engine (VM), the differential between which and the respective nominal engine speed is sent to the final speed controlling element (DRS) for the combustion engine (VM).

14. Controllable drive unit according to any of the preceding claims, characterised in that the final speed controlling element (DRS) includes a stroke setting for a fuel injection device.

15. Controllable drive unit according to any of claims 10 to 14, characterised in that in the control device (ST) the respective measured internal temperature is compared with a preset lower threshold temperature level which is below the respective preset nominal temperature by a preset temperature differential, and whenever the internal temperature is below the lower threshold temperature level, the combustion engine (VM) is switched off or decoupled in a controlled manner from the compressor (2), and once the internal temperature has then re-attained the preset nominal temperature, the combustion engine (VM) is again started up or coupled to the compressor (2) in a controlled manner.

16. Controllable drive unit according to any of claims 10 to 15, characterised in that the generator coupled to the combustion engine (VM) is an electrical three-phase generator (G) which supplies a three-phase blowing engine (40, 70) respectively associated with the evaporator (4) and/or the condenser (7).

17. Controllable drive unit according to any of claims 10 to 16, characterised in that the generator (G) supplies a converter circuit (80) which transmits a preset voltage and frequency to a vehicle electrical system (V) on the omnibus or the like.

18. Controllable drive unit according to any of claims 10 to 17, characterised in that the electrical output received by a vehicle electrical system (V) on the omnibus or the like is ascertained in each case by a current measuring instrument (IM) and sent to the control device (ST), and in the control device (ST) it is in each case computed into the refrigeration output requirement.

19. Controllable drive unit according to any of claims 10 to 18, characterised in that the coefficients of the refrigeration output requirement are stored in the control device (ST) and whenever the compressor (2) is shut down and whenever the nominal temperature is exceeded by a preset measure an optimisation program is used to incrementally raise or lower the relevant refrigeration output requirement coefficient in a direction counteracting the said shutdown or excess.

## Revendications

1. Unité d'entraînement commandable pour un dispositif de travail comprenant un moteur à combustion, une machine motrice entraînée par celui-ci et un générateur électrique couplé au moteur à combustion, lequel générateur alimente des consommateurs de courant, directement et/ou par l'intermédiaire d'au moins un circuit convertisseur délivrant une tension et une fréquence prédéterminées, le rendement étant réglé, à l'aide d'un capteur de valeur réelle, en fonction d'une valeur de consigne prédéterminée pour une grandeur réglée dans le cadre du processus de travail, et le nombre de tours-minute du moteur à combustion étant réglable en dépendance du rendement requis, caractérisée en ce que,

- sur la base d'une différence entre la valeur réelle (IW) mesurée et la valeur de consigne (SW) de la grandeur réglée, ainsi que de paramètres (PW) influençant la grandeur réglée, lesquels sont mesurés continuellement par les capteurs (M2) correspondants, et de coefficients de rendement exigé par le dispositif de travail (AV) subordonnés à ces valeurs de mesure, les besoins actuels sont détectés et qu'une vitesse de rotation optimale du moteur est déterminée à partir de valeurs d'une ligne caractéristique de vitesse mémorisée dans un dispositif de commande (ST), cette vitesse de rotation oiptimale étant conduite à un organe de réglage de vitesse de rotation (DRS) du moteur à combustion (VM),
- et que la puissance consommée est mesurée et additionnée aux besoins d'énergie.

2. Unité d'entraînement commandable selon la revendication 1, caractérisée en ce que le dispositif de commande (ST) reçoit un signal de vitesse de rotation émis par un capteur de vitesse de rotation (DM) équipant le moteur à combustion (VM), la différence entre la valeur mesurée et la vitesse de consigne actuelle étant conduite à un organe de réglage de la vitesse de rotation (DRS) du moteur à combustion (VM).

3. Unité d'entraînement commandable selon la revendication 1 ou 2,
caractérisée en ce que
la valeur réelle mesurée (IW) de la valeur réglée est comparée, dans le dispositif de commande (ST) à une valeur limite supérieure ou inférieure, d'une différence prédéterminée, à la valeur de consigne actuelle et que, chaque fois que la valeur réelle (IW) dépasse la valeur limite supérieure ou inférieure, le moteur à combustion (VM) est désaccouplé, par commande, de la machine motrice (AM), à l'aide d'un embrayage (K), le générateur (G) continuant à être entraîné, et que, lorsque la valeur réelle a atteint, de nouveau, la valeur de consigne prédéterminée, le moteur à combustion (VM) est de nouveau accouplé à la machine motrice (AM).

4. Unité d'entraînement commandable selon l'une des revendications 1 à 3,
caractérisée en ce que
le générateur triphasé (G) alimente un convertisseur (UF1) qui débite de la tension continue prédéterminée pour alimenter un consommateur de courant (V2) et/ou charger un accumulateur (AKKU).

5. Unité d'entraînement commandable selon la revendication 4,
caractérisée en ce que
le courant de chargement (IL) pour l'accumulateur (AKKU) est coupé par un circuit de contrôle de chargement (LK) quand l'accumulateur (AKKU) est complètement chargé.

6. Unité d'entraînement commandable selon la revendication 4 ou 5,
caractérisée en ce que
la consommation d'énergie électrique prélevée au générateur triphasé (G) et détectée par un appareil de mesure de courant (IM1) et/ou la consommation d'énergie électrique prélevée à l'accumulateur (AKKU) et/ou au convertisseur (UF1) et détectée par un appareil de mesure de courant (IM2) sont additionnées aux besoins d'énergie, dans le dispositif de commande (ST).

7. Unité d'entraînement commandable selon l'une des revendications 4 à 6,
caractérisée en ce que
le moteur à combustion (VM) est arrêté par commande quand aucun travail mécanique n'est demandé et que les besoins d'énergie électrique sont très faibles, l'accumulateur (AKKU) servant à assurer temporairement l'alimentation en courant et le moteur à combustion (VM) étant automatiquement démarré, électriquement, à l'aide d'un starter (START) avant que l'accumulateur (AKKU) soit complètement déchargé.

8. Unité d'entraînement commandable selon l'une des revendications 1 à 7,
caractérisée en ce que
le générateur triphasé (G) est equipé d'un volant de masse adéquate en vue de la compensation des pointes atteintes lors de l'accouplement du moteur à combustion (VM) à la machine motrice (AM) ou de son désaccouplement.

9. Unité d'entraînement commandable selon l'une des revendications précédentes,
caractérisée en ce que
la fréquence (f) du générateur (G) est réglée, par le dispositif de commande, par l'intermédiaire du nombre de tours-minute du moteur à combustion (VM), au sein d'une bande de fréquences autorisée, aux environs d'une fréquence nominale ($f_n$) du générateur, entre une valeur de fréquence inférieure ($f_u$) et une valeur de fréquence supérieure ($f_o$), de sorte que la tension de sortie du générateur se trouve adaptée à la consommation d'énergie électrique actuelle.

10. Unité d'entraînement commandable selon la revendication 1,
caractérisée en ce que

celle-ci comprend un dispositif de réfrigération pour une chambre de réfrigération (R), telle que l'intérieur d'un camion frigorifique, d'un véhicule de transport en commun ou analogues, avec un compresseur (2) entraîné par le moteur à combustion (VM), avec un circuit d'agent réfrigérant, y raccordé, lequel présente un condensateur (7), une soupape d'expansion (5) et, au moins, un évaporateur (4), dont la conduite de retour est ramenée au compresseur (2), côté aspiration, le rendement frigorifique étant réglée, thermostatiquement, à l'aide d'un thermomètre interne (TI) en fonction d'une température de consigne prédéterminée et que,
sur la base d'une différence entre la température intérieure mesurée et la température de consigne, ainsi que d'une différence entre la température externe, mesurée constamment par un thermomètre au moins, et la température de consigne, de même que de coefficients relatifs aux besoins de puissance frigorifique, subordonnés à ces valeurs, la puissance frigorifique exigée par les besoins actuels est détectée et le nombre de tours de consigne optimal du moteur est déterminé à partir de valeurs d'une ligne caractéristique, mémorisée dans le dispositif de commande (ST), et conduit à un régleur de vitesse de rotation (DR) du moteur à combustion (VM).

11. Unité d'entraînement commandable selon la revendication 10,
caractérisée en ce que
plusieurs thermomètres extérieurs sont disposés sur différentes surfaces extérieurs, sur différents côtés de l'installation à réfrigérer.

12. Unité d'entraînement commandable selon les revendications 10 et 11,
caractérisée en ce que
l'installation à réfrigérer est équipée d'un capteur de rayonnements thermiques extérieurs (SM) dont chaque signal de mesure de rayonnement, lié à un coefficient de perméabilité aux rayons des surfaces vitrées, est pris en compte dans le calcul des besoins d'énergie frigorifique.

13. Unité d'entraînement commandable selon l'une des revendications 10 à 12,
caractérisée en ce que
un régleur de vitesse de rotation (DR) fait partie inhérente du dispositif de commande (ST) et qu'un signal de nombre de tours-minute émit par capteur de vitesse de rotation DM), subordonné au moteur à combustion (VM) est conduit à ce régleur de vitesse de rotation (DR) et qie la différence entre ce signal et la vitesse de rotation de consigne du moteur est conduite à l'rogane de réglage de vitesse de rotation (DRS) du moteur à combustion (VM).

14. Unité d'entraînement commandable selon l'une des revendications précédentes,
caractérisée en ce que
l'organe de réglage de la vitesse de rotation (DRS) comprend un réglage de levée d'un dispositif d'injection de carburant.

15. Unité d'entraînement commandable selon l'une des revendications 10 à 14,
caractérisée en ce que,

dans le dispositif de commande (ST), la température intérieure mesurée est comparée à une valeur limite de température inférieure prédéterminée, laquelle valeur limite est inférieure, d'une différence prédéterminée, à la température de consigne et que,
chaque fois que la température intérieure tombe au-dessous de cette valeur limite inférieure, le moteur à combustion (VM) est mis hors de service ou désaccouplé du compresseur (2), par commande, et qu'il est redémarré ou réaccouplé au compresseur (2), par commande, quand la température intérieure a atteint, de nouveau, la température de consigne prédéterminée.

16. Unité d'entraînement commandable selon l'une des revendications 10 à 15,
caractérisée en ce que
le générateur (G) accouplé au moteur à combustion (VM) est un générateur courant triphasé (G) qui alimente un moteur à courant alternatif triphasé de soufflantes (40, 70) affectées respectivement à l'évaporateur (4) et/ou au condensateur (7).

17. Unité d'entraînement commandable selon l'une des revendications 10 à 16,
caractérisée en ce que
le générateur (G) aliment un circuit convertisseur (80) qui délivre à un réseau de bord (V) d'un véhicule de transport en commun ou analogue une tension et une fréquence prédéterminées.

18. Unité d'entraînement commandable selon l'une des revendications 10 à 17,
caractérisée en ce que
toute puissance électrique absorbée par un réseau de bord d'un véhicule de transport en commun ou analogue est détectée par un appareil de mesure de courant (IM), signalée au dispositif de commande (ST) et imputée aux besoins d'énergie réfrigérante.

19. Unité d'entraînement commandable selon l'une des revendications 10 à 18,
caractérisée en ce que
les coefficients de besoins d'énergie réfrigérante sont mémorisés dans le dispositif de commande (ST) et que, lors d'une mise hors de service du compresseur (2), respectivement lorsque la température de consigne est dépassée d'une mesure prédéterminée, une élévation ou une diminution incrémentielle du coefficient de besoins concerné s'effectue dans le sens opposé, à l'aide d'un programme d'optimalisation.

Fig.1

Fig.2

Fig.3